# EUROPEAN PATENT APPLICATION

(11) **EP 1 077 561 A2**
(43) Date of publication of application: **21.02.2001**
(21) Application number: 00307013.3
(22) Date of filing: 16.08.2000
(51) Int. Cl.: H04L 27/26

(54) **Removal of a DC component in a multicarrier receiver**

(30) Priority: 19.08.1999 JP 23287799
(71) Applicant: SONY CORPORATION, Tokyo 141 (JP)
(72) Inventor: Hyakudai, Toshihisa, c/o Sony Corporation, Tokyo (JP); Miyamoto, Masakuni, c/o Sony Corporation, Tokyo (JP)
(74) Representative: Robinson, Nigel Alexander Julian

(57) **Abstract**

An OFDM receiving apparatus capable of demodulating an OFDM signal at a high precision by removing a direct current component generated by an A/D conversion. A received OFDM modulated signal is multiplied with a local oscillation signal by a multiplier to be converted to an intermediate frequency signal IF, only a signal component having a predetermined band is extracted by a band-pass filter, and the result is converted by an A/D converter to a digital signal. In the direct current removal circuit, the direct current component of the data is extracted by an IIR filter, the direct current component is removed by a subtractor, and a signal including only OFDM signal components is output. The OFDM signal is demodulated by a digital quadrature demodulator to orthogonal I-channel and Q-channel signals, and subjected to frequency analysis by an FFT processor, whereby demodulated signals are output. Thus, the effects by the direct current component can be prevented and high precision signal demodulation can be realized.

## Description

The present invention relates to a receiving apparatus for receiving a broadcast signal of an OFDM modulation format, more particularly relates to a receiving apparatus provided with a direct current component removal circuit for removing a direct current component of a received signal.

A modulation format of a digital signal called "orthogonal frequency division multiplexing (OFDM)" has been proposed and put into practical use in the transmission of digital signals, for example, in the field of digital broadcasting, in recent years. The OFDM modulation format provides a large number of orthogonal subcarriers in a transmission band, assigns data to an amplitude and a phase of a subcarrier, modulates it in a digital modulation format such as PSK and QAM, and multiplexes the modulated signal in the subcarrier for transfer.

Since the transmission band is divided between a large number of subcarriers in this way, the bandwidth per subcarrier becomes narrow and the symbol speed becomes slow. However, since the number of subcarriers is large, the total transmission speed is almost the same as that of conventional modulation formats. Also, since the symbol speed becomes slow, in a transmission path with multi-path interference, the duration of the multi-path interference can be made short with respect to the symbol duration, thus the present format is expected to be a modulation format tolerant to multi-path interference. The OFDM modulation format is, due to such characteristics, gathering attention particularly in digital signal transmission by groundwaves - which are largely affected by multi-path interference.

One of the reasons why the OFDM modulation format has drawn attention is that recent advances in semiconductor technology have enabled realization of fast Fourier transforms (hereinafter, referred to as FFT for convenience) and inverse fast Fourier transforms by hardware and that this enables simple OFDM modulation and conversely demodulation of a signal modulated by the OFDM format.

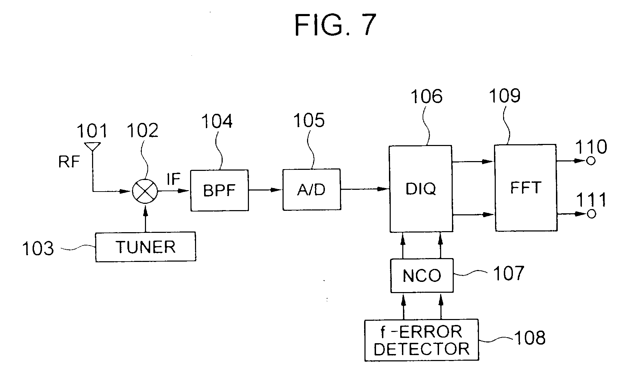

Figure 7 is a block diagram of an example of the configuration of an OFDM receiving apparatus for receiving an OFDM modulated signal. In Fig. 7, 101 indicates a receiving antenna, 102 a multiplier, 103 a tuner, 104 a band-pass filter (BPF), 105 an analog/digital conversion circuit (A/D), 106 a digital quadrature demodulator (DIQ), 107 a numerical control oscillator (NCO), 108 a carrier frequency error detector (f-error detector), 109 an FFT processor, and 110 and 111 outputs of the receiver, specifically, demodulated data of the orthogonal I-channel and Q-channel.

Below, a receiving operation of an OFDM modulated signal will be explained with reference to Fig. 7.

The receiving antenna 101 captures an RF (radio frequency) signal and supplies the received signal to the multiplier 102. The multiplier 102 mixes a local oscillation signal generated in the tuner 103 and the RF signal to produce an intermediate frequency band signal (IF signal) which it supplies to the BPF 104. Note that the mixing of the local oscillation signal and the RF signal is realized for example by multiplication.

The BPF 104 extracts only the IF signal having a predetermined frequency component and supplies it to the A/D converter 105. The A/D converter 105 converts the input IF signal to a digital signal.

The digital quadrature demodulator 106 demodulates the digitalized IF signal into the I-channel component and Q-channel component and converts these to baseband signals by reproduction carrier frequencies generated by the NCO 107 controlled by detection signals of the carrier frequency error detector 108. It supplies the baseband signals to the FFT processor 109 which then analyzes their frequencies and outputs the I-channel and Q-channel demodulated data 110 and 111.

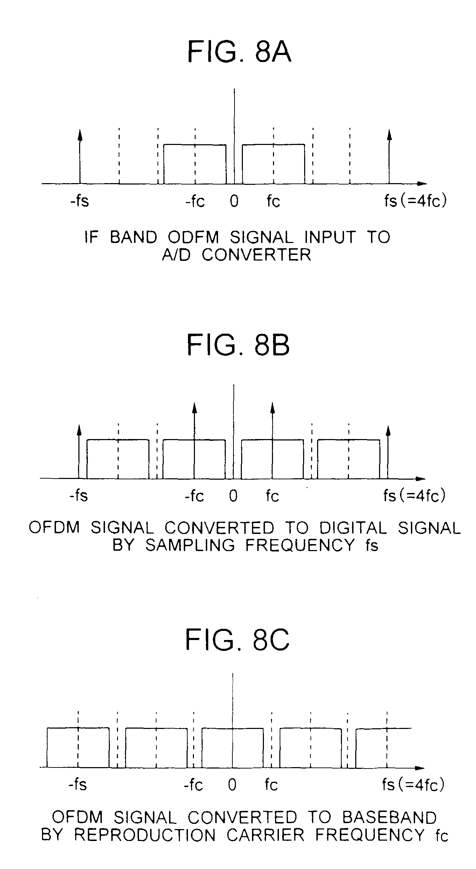

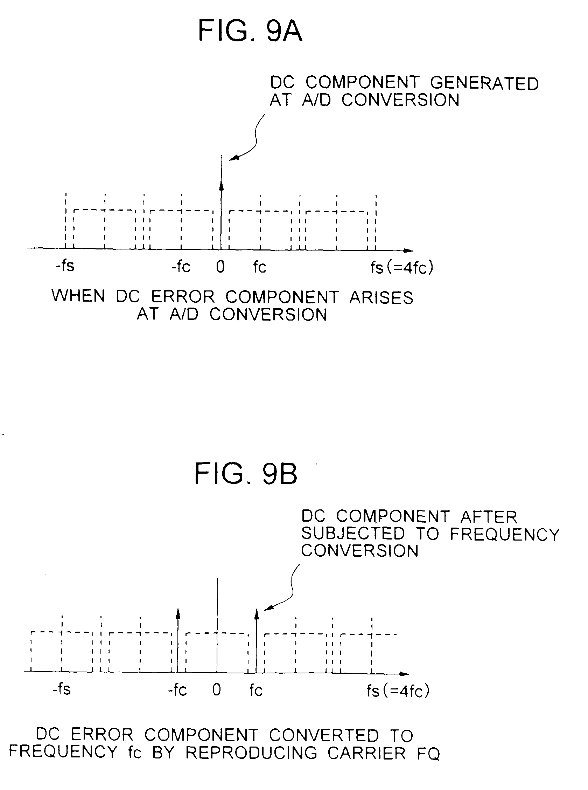

Figures 8 and 9 are conceptual views of a process of frequency transition when converting the IF signal from an analog to digital format and demodulating it by digital quadrature demodulation.

As shown in Fig. 8A, an OFDM modulated signal having a center frequency of the regulation IF frequency f_{c} is input to the A/D converter 105 first. The A/D converter 105 samples the OFDM modulated signal by a sampling frequency fₛ (fₛ=4f_{c}) to convert it to a digital signal. As a result of the conversion, repeating components are generated as shown in Fig. 8B.

Next, as shown in Fig. 8C, the digital quadrature demodulator 106 converts the digitalized IF signal to the baseband using the IF frequency f_{c}. Then, the FFT processor 109 analyzes the frequency of the signal converted to the baseband, that is, the signal within a frequency range of -f_{c} to f_{c}, to thereby demodulate the OFDM modulated signal.

In the above receiving apparatus, however, when converting an analog signal of an IF band to a digital signal in the A/D converter 105, an unnecessary direct current components are generated due to a direct current offset at the time of input to the A/D converter 105 and a conversion error of the A/D converter. Figure 9A shows the state where a direct current component is generated at the time of A/D conversion. As shown in the figure, a direct current component having a large power is generated at a frequency of "0".

Next, as shown in Fig. 9B, when the digital quadrature demodulator 106 converts the signal to the baseband by using the IF frequency f_{c}, the unnecessary direct current component is up converted, that is, converted to the frequency f_{c}. As a result, since the FFT processor 109 analyzes the frequency in the frequency bandwidth of -f_{c} to f_{c}, it analyzes not only the OFDM signal components but also the direct current component converted to the frequency f_{c}. The direct current component is analyzed in frequency and mixed into the demodulated signal.

In the FFT processor 109, the maximum power of the signal able to be processed is fixed. When there is an unnecessary signal having a larger power compared with the OFDM modulated signal in a frequency bandwidth other than the OFDM modulated signal components, there is the problem that a dynamic range is allocated for expressing the unnecessary signal and therefore the OFDM signal components having a smaller power cannot be expressed with a sufficient accuracy. The power of each carrier in an OCDM modulated signal is the power of the OFDM modulated signal divided by the number of carriers, however a direct current component is a non-modulated signal, so has a larger power than a carrier of the OFDM signal in some cases.

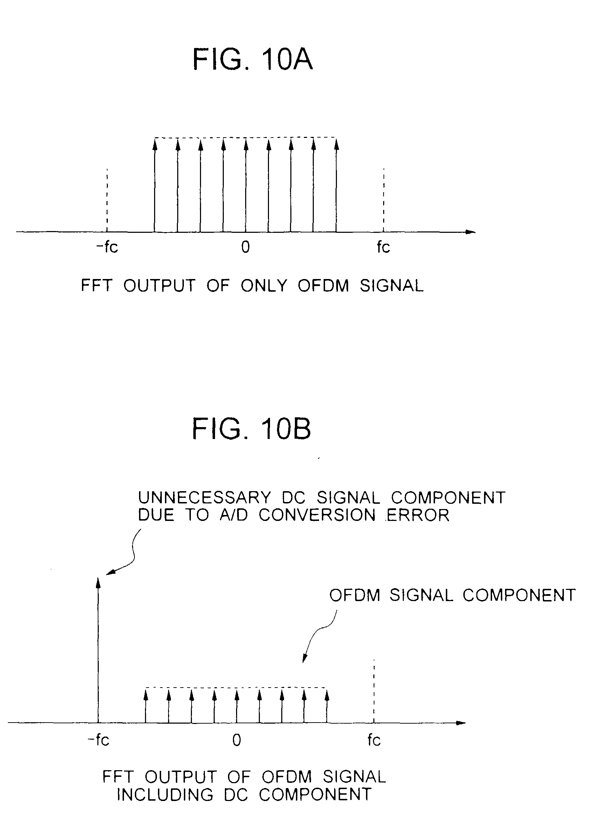

Figure 10 is a view of OFDM signal components obtained by FFT processing. Figure 10A shows a power of an output signal of the FFT processor 109 when there are only OFDM signal components and no unnecessary direct current components. Note that here each of the OFDM carriers is assumed to have the same power. Figure 10B shows the OFDM signal components when an unnecessary direct current component is generated in the A/D conversion. As shown in the figure, the unnecessary direct current component generated by the A/D conversion is converted to the frequency -f_{c} and subjected to FFT processing together with the other OFDM signal components. Since the direct current component has a large power, to express the power, the dynamic range of the FFT processor 109 is allocated, so the OFDM signal components having a relatively smaller power cannot be expressed by a sufficient accuracy. Accordingly, there is the disadvantage that a sufficient accuracy of the result of the demodulation of the OFDM modulated signal due to the FFT processing can no longer be guaranteed.

An object of at least preferred embodiments of the present invention is to provide a direct current component removal circuit for removing a direct current component generated by A/D conversion and therefore enabling demodulation of an OFDM signal by a sufficient accuracy and an OFDM receiving apparatus using the same.

To achieve the above object, the direct current component removal circuit of at least preferred embodiments of the present invention provides a direct current component removal circuit for removing a direct current component included in a received OFDM modulated signal, comprising a signal extraction circuit for extracting said direct current component included in an OFDM modulated signal and a processing circuit for subtracting between said OFDM modulated signal and an output of said signal extraction circuit.

Further, the OFDM receiving apparatus of at least preferred embodiments of the present invention provides an OFDM receiving apparatus for demodulating a received OFDM modulated signal, comprising a frequency conversion circuit for converting said OFDM modulated signal to an intermediate frequency signal; a band-pass filter for extracting a signal component of a predetermined frequency band included in an output signal of said frequency conversion circuit; an analog/digital conversion circuit for converting an output signal of said band-pass filter to a digital signal; a direct current component removal circuit for removing a direct current component included in output data of said analog/digital conversion circuit; a digital quadrature demodulation circuit for demodulating the output signal of said direct current component removal circuit by digital quadrature demodulation; and a frequency analysis circuit for analyzing the frequency of the output signal of said digital quadrature demodulation circuit. Further, in at least preferred embodiments of the present invention, preferably, said direct current component removal circuit comprises a signal extraction circuit for extracting a direct current component included in the output data of said analog/digital conversion circuit and a processing circuit for subtracting between the output data of said analog/digital conversion circuit and the output data of said signal extraction circuit and the signal extraction circuit is an IIR filter.

Further, in at least preferred embodiments of the present invention, said frequency conversion circuit comprises an oscillation circuit for generating an oscillation signal in accordance with a frequency of said received OFDM modulated signal and a signal mixing circuit for mixing the oscillation signal from said oscillation circuit and said received OFDM modulated signal and the signal mixing circuit is comprised for example by a multiplier for multiplication.

According to at least preferred embodiments of the present invention, the OFDM receiving apparatus converts the received OFDM modulated signal to an intermediate frequency signal, then extracts a signal band having a predetermined center frequency by a band pass filter and converts the extracted signal to a digital signal by an analog/digital conversion circuit. In this conversion, the digital signal obtained by the conversion includes a direct current component due to the direct current component included in the extracted signal or conversion error of the analog/digital conversion circuit. If the direct current component were to be supplied as it is to the next processing circuit, the precision of the FFT processing would be affected and the OFDM modulated signal could not be correctly demodulated. In the present invention, the output signal of the analog/digital conversion circuit is processed by the direct current component removal circuit to remove the direct current component. For example, the signal extraction circuit extracts the direct current component included in the digital signal and subtracts it from the original digital signal to remove the direct current component. The digital signal from which the direct current component was removed then goes through digital quadrature demodulation and further FFT processing to demodulate the OFDM modulated signal with a good precision.

Embodiments of the invention will now be described, by way of example only, with reference to the accompanying drawings in which:
Fig. 1 is a circuit diagram of a first embodiment of an OFDM receiving apparatus according to an example embodiment of the present invention;
Figs. 2A and 2B are views of the frequency characteristics of an IIR filter and an output of A/D conversion;
Figs. 3A and 3B are views of the frequency characteristics of the IIR filter and an output of a direct current component removal circuit;
Fig. 4 is a circuit diagram of the configuration of the IIR filter;
Fig. 5 is a circuit diagram of a second embodiment of an OFDM receiving apparatus according to an example embodiment of the present invention;
Fig. 6 is a view of the frequency characteristics of an FIR filter comprising the OFDM receiving apparatus in Fig. 5;
Fig. 7 is a circuit diagram of an example of an OFDM receiving apparatus of the related art;
Figs. 8A to 8C are views of a process of frequency transition of a signal in the OFDM receiving apparatus;
Figs. 9A and 9B are views of a process of frequency transition of a signal in the OFDM receiving apparatus; and
Figs. 10A and 10B are views of OFDM signal components obtained by FFT.

Below, preferred embodiments will be described with reference to the accompanying drawings.

### First Embodiment

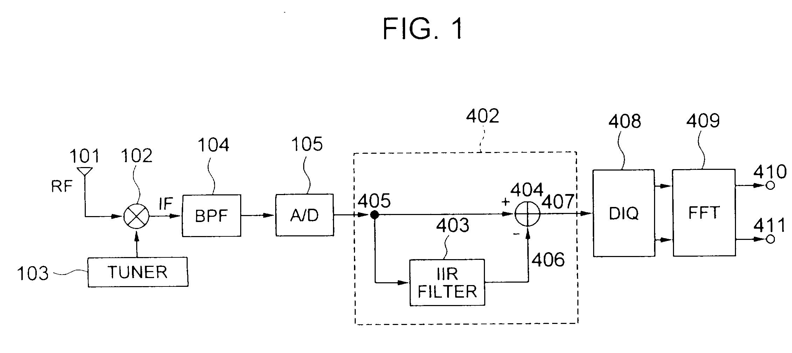

Figure 1 is a circuit diagram of a first embodiment of an OFDM receiving circuit according to the present invention. In Fig. 1, each of the circuit parts from the receiving antenna 101 to the A/D converter 105 in the OFDM receiving apparatus has the same configuration and function as each of the circuit parts in the receiving apparatus shown for example in Fig. 7.

The OFDM receiving apparatus of the present embodiment has a direct current component removal circuit 402 provided between the A/D converter 105 and a digital quadrature demodulator 408. The direct current component removal circuit 402 removes a direct current component included in the output data 405 from the A/D converter 105 and therefore suppresses the effects caused by the direct current component.

Below, the components of the OFDM receiving apparatus of the present embodiment will be explained.

The receiving antenna 101 captures an RF signal and supplies the same to the multiplier 102.

The tuner 103 controls an oscillation frequency of a local oscillation signal in accordance with the frequency of the received RF signal and supplies the local oscillation signal to the multiplier 102.

The multiplier 102 multiplies the RF signal from the receiving antenna 101 with a local oscillation signal from the tuner 103 to generate an intermediate frequency band signal IF having a predetermined intermediate frequency and supplies it to the band-path filter 104. The band-path filter 104 extracts only a predetermined frequency component of the IF signal and supplies it to the A/D converter 105.

The A/D converter 105 converts the IF signal extracted by the band-path filter 104 to a digital signal 405 and supplies it to the direct current component removal circuit 402. Here, an unnecessary direct current component due to, for example, a direct current offset of an input signal of the A/D converter 105 or a conversion error of the A/D converter 105 is mixed in the output data 405.

The direct current removal circuit 402 is configured by an IIR filter 403 and a subtraction circuit 404. The IIR filter 403 extracts a predetermined low frequency component 406 of the output data 405 of the A/D converter 105 and supplies it to the subtraction circuit 404. Namely, the IIR filter 403 has the characteristics of a low pass filter (LPF) and extracts the low frequency signal component 406 including the direct current component included in the data 405.

The subtraction circuit 404 subtracts the output signal 406 of the IIR filter 403 from the output signal 405 of the A/D converter 105. As a result of the subtraction, the direct current component included in the output signal 405 of the A/D converter 105 and the low frequency component of its nearby band are removed and data 407 without a direct current component is output.

The digital quadrature demodulator 408 generates I-channel and Q-channel quadrature demodulated signals in the baseband in accordance with the data 407 from which the direct current component was removed and supplies them to the FFT processor 409.

The FFT processor 409 analyzes the frequency by FFT on the input I-channel and Q-channel signals and outputs demodulated signals 410 and 411. Here, since the direct current component included in the input signal was already removed by the direct current component removal circuit 402, only the OFDM signal components are input to the FFT processor 409 and the original OFDM signal components are correctly demodulated by the FFT.

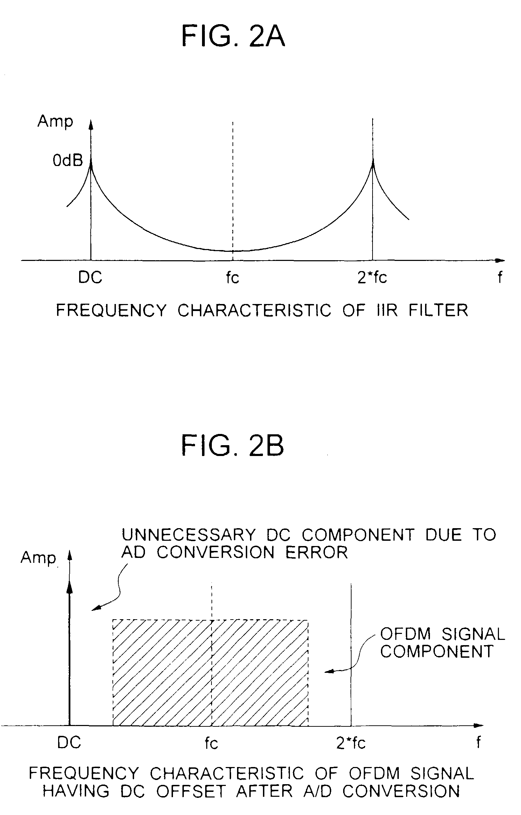

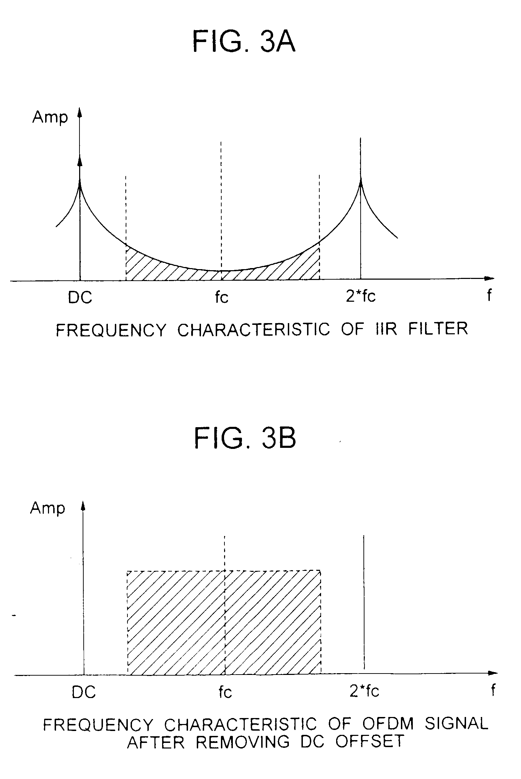

Figures 2 and 3 are views of an IIR filter for removing the direct current component and the frequency characteristics of a signal before and after the processing in the present embodiment. Below, the removal of the direct current component in the OFDM receiving apparatus of the present embodiment will be explained with reference to the drawings.

Figures 2A and 2B show the frequency characteristics of the IIR filter 403 in the direct current component removal circuit and frequency characteristics of the output signal 405 of the A/D converter 105, respectively.

As shown in Fig. 2A, the IIR filter 403 has frequency characteristics almost the same as those of the low pass filter, that is, it allows the direct current component (DC) pass to the maximum extent and reduces the high frequency component. As shown in Fig. 2B, there is an unnecessary direct current component in the output data of the A/D converter 105 in addition to the OFDM signal components due to A/D conversion error.

Figures 3A and 3B show frequency characteristics of the output signal 406 of the IIR filter and the output signal of the subtractor 404, respectively.

As shown in Fig. 2A, since the IIR filter 403 has the characteristics of a low pass filter, the direct current component included in the input signal is not reduced much at all and is output as it is. On the other hand, the high frequency component of the input signal, for example, the signal component near the center frequency f_{c} of the OFDM band, is reduced and slightly remains in the output signal.

As a result of subtraction between the output signal 405 of the A/D converter 105 and the output signal 406 of the IIR filter 403, a signal 407 having the frequency characteristics as shown in Fig. 3B is output. As shown in the figure, the direct current component of the output signal of the A/D converter is almost completely removed and only the OFDM signal components remain in the output signal 407 of the subtractor 404.

As explained above, in the OFDM receiving apparatus of the present embodiment, the output data 405 of the A/D converter 1105 is input to the IIR filter 403 and the direct current component and the nearby low frequency component 406 are extracted. As a result of subtraction between the output data 405 of the A/D converter 105 and the output data 406 of the IIR filter 403 by the subtractor 404, the data 407 from which the direct current component is removed is output.

The data from which the direct current component is removed is supplied to the digital quadrature demodulator 408. The digital quadrature demodulator 408 demodulates the input signal by quadrature demodulation to output the I-channel and Q-channel demodulated data in the baseband and supplies them to the FFT processor 409. The FFT processor 409 analyzes the frequency analysis of the I-channel and Q-channel data and outputs the demodulated data 410 and 411. Here, since the direct current component is already removed and only the OFDM signal components are included in the signal input to the FFT processor 409, the FFR processing is performed at a high accuracy and the OFDM components are correctly demodulated.

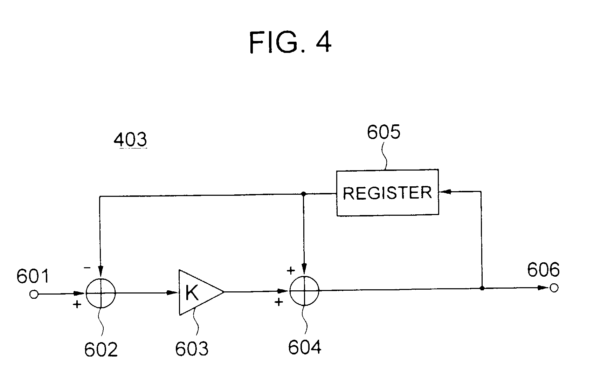

Figure 4 is an equivalent circuit showing an example of the IIR filter comprising the direct current component removal circuit 402 in the present embodiment.

As shown in the figure, the IIR filter 403 is comprised by a subtractor 602, an amplifier 603, an adder 604, and a register 605.

The input data 601 and an output of the register 605 are subtracted in the subtractor 602. The result of the subtraction is supplied to the amplifier 603, and data amplified by an amplification coefficient K is input to the adder 604. The adder 604 adds the amplified data and the output data of the register 605 and outputs the added result 606.

In the above IIR filter 403, since the multiplication coefficient K of the multiplier 603 determines the frequency characteristics of the IIR filter, the filter characteristics can be changed by changing the coefficient K. Furthermore, the register 605 holds output data of the filter for every operational frequency 2f_{c}. In this way, there is only one multiplier in the IIR filter 403, so the circuit scale can be made smaller comparing with FIR filters having a plurality of multipliers.

Note that when data processing ability is sufficient, the IIR filter 403 configured by the above hardware can be realized by signal processing of a DST (digital signal processor). When using a DSP, addition, subtraction, and multiplication can be performed by numerical processing in the DSP and the data holding function of the register can be realized by a memory inside the DSP. Furthermore, when using a DSP, parameters for processing, for example, the multiplication coefficient K can be appropriately set from the outside and can be adjusted at any time in accordance with a signal receiving condition, so the characteristics of the IIR filter can be optimally set.

### Second Embodiment

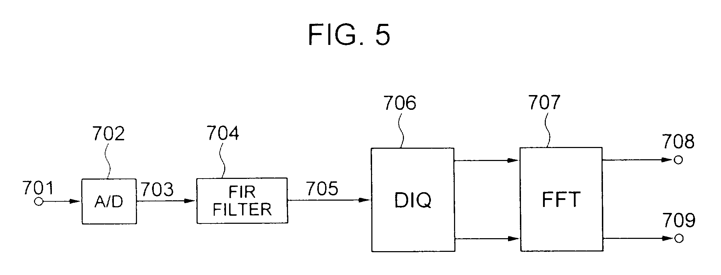

Figure 5 is a circuit diagram of a second embodiment of an OFDM receiving apparatus according to the present invention. Note that Fig. 5 shows only part of the OFDM receiving apparatus, that is, the circuit parts from the A/D converter 702 to the FFT processor 706. The circuit parts before the A/D converter 702 such as the receiving antenna, multiplier, and band-pass filter correspond to the respective portions in the first embodiment shown in Fig. 1, so these parts are omitted here. Note that the A/D converter 702 has substantially the same configuration as the A/D converter 105 shown in Fig. 1.

The A/D converter 702 receives as its input an OFDM signal 701 having a predetermined center frequency f_{c}. Here, the input signal 701 is the same as a predetermined band signal extracted from an IF signal converted in frequency by a multiplier, such as an output signal of the band-pass filter 104 shown in Fig. 1.

An unnecessary direct current component is included in the output data 703 after the conversion due to the direct current offset included in the input signal 701 of the A/D converter 702 or an error of the A/D converter 702.

The output signal 703 of the A/D converter 702 is input to the FIR filter 704. The FIR filter 704 allows the high frequency component of the input data 703 to pass and reduces the direct current component. Namely, the FIR filter 704 has the characteristics of a high pass filter. Data 705 from which the direct current component is removed is supplied to the digital quadrature demodulator 705.

The later quadrature demodulator 706 and FFT processor 707 are substantially the same as the digital quadrature demodulator 408 and the FFT processor 409 of the first embodiment. Namely, the digital quadrature demodulator 706 generates I-channel and Q-channel quadrature demodulated signals in the baseband in accordance with the data 705 from which the direct current component is removed and supplies the same to the FFT processor 707.

The FFT processor 707 analyzes the frequency of the input I-channel and Q-channel signals by FFT and outputs demodulated signals 708 and 709.

In the OFDM receiving apparatus of the present embodiment, since the direct current component included in the output data 703 of the A/D converter 702 is removed by the FIR filter 704, only the OFDM signal components are input to the FFT processor 409 and the original OFDM signal components are correctly demodulated by the FFT.

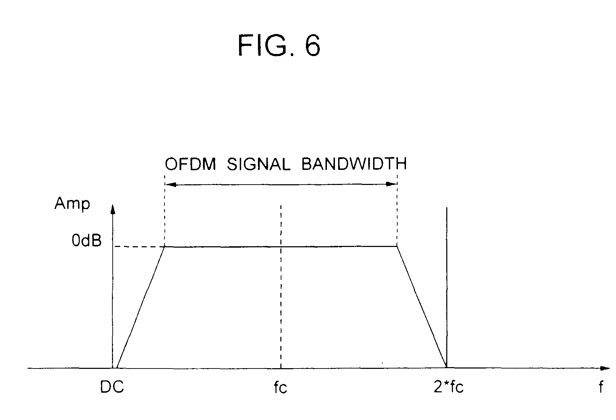

Figure 6 shows the frequency characteristics of the FIR filter 704 used in the OFDM receiving apparatus of the present embodiment.

As shown in the figure, the FIR filter 704 has the characteristics of a high pass filter, that is, reduces the direct current component and allows only the high range signal component to pass. The direct current component included in the output data 703 of the A/D converter 702 is removed by the FIR filter 704 and only the signal component within the OFDM signal bandwidth shown in Fig. 6 is output.

As explained above, according to the direct current removal circuit and OFDM receiving apparatus using the same of the present invention, there is the advantage that direct current component generated by an error of an A/D converter and direct current offset can be removed and therefore the precision of the FFT processing can be improved, and an OFDM modulated signal can be correctly demodulated.

While the invention has been described with reference to specific embodiment chosen for purpose of illustration, it should be apparent that numerous modifications could be made thereto by those skilled in the art without departing from the basic concept and scope of the invention.

## Claims

1. A direct current component removal circuit for removing a direct current component included in a received OFDM modulated signal, comprising:
a signal extraction circuit for extracting said direct current component included in an OFDM modulated signal and
a processing circuit for subtracting between said OFDM modulated signal and an output of said signal extraction circuit.

2. A direct current component removal circuit as set forth in claim 1, wherein said signal extraction circuit includes an IIR filter.

3. An OFDM receiving apparatus for demodulating a received OFDM modulated signal, comprising:
a frequency conversion circuit for converting said OFDM modulated signal to an intermediate frequency signal;
a band-pass filter for extracting a signal component of a predetermined frequency band included in an output signal of said frequency conversion circuit;
an analog/digital conversion circuit for converting an output signal of said band-pass filter to a digital signal;
a direct current component removal circuit for removing a direct current component included in output data of said analog/digital conversion circuit;
a digital quadrature demodulation circuit for demodulating the output signal of said direct current component removal circuit by digital quadrature demodulation; and
a frequency analysis circuit for analyzing the frequency of the output signal of said digital quadrature demodulation circuit.

4. An OFDM receiving circuit as set forth in claim 3, wherein said direct current component removal circuit comprises:
a signal extraction circuit for extracting a direct current component included in the output data of said analog/digital conversion circuit and
a processing circuit for subtracting between the output data of said analog/digital conversion circuit and the output data of said signal extraction circuit.

5. An OFDM receiving circuit as set forth in claim 4, wherein said signal extraction circuit includes an IIR filter.

6. An OFDM circuit as set forth in claim 3, wherein said frequency analysis circuit has an FFT processing circuit for FFT.

7. An OFDM receiving circuit as set forth in claim 3, wherein said frequency conversion circuit comprises
an oscillation circuit for generating an oscillation signal in accordance with a frequency of said received OFDM modulated signal and
a signal mixing circuit for mixing the oscillation signal from said oscillation circuit and said received OFDM modulated signal.

8. An OFDM receiving apparatus as set forth in claim 7, wherein said signal mixing circuit has a multiplier for multiplying the oscillation signal from said oscillation circuit and said received OFDM modulated signal.
